# EUROPÄISCHE PATENTSCHRIFT

(11) **EP 1 332 164 B1**
(45) Veröffentlichungstag und Bekanntmachung des Hinweises auf die Patenterteilung: **13.02.2008**
(21) Anmeldenummer: 01993638.4
(22) Anmeldetag: 22.10.2001
(51) Int. Cl.: C08F 226/06, C08F 216/14, C08F 290/06, C08F 220/34, C08F 220/60

(54) **STABILISATOREN FÜR DIE POLYMERISATION WASSERLÖSLICHER VINYLMONOMERE UND EIN VERFAHREN ZUR HERSTELLUNG HÖHERKONZENTRIERTER POLYMERDISPERSIONEN**
STABILIZERS USED FOR THE POLYMERIZATION OF WATER-SOLUBLE VINYL MONOMERS, AND METHOD FOR PRODUCING HIGHLY CONCENTRATED POLYMER DISPERSIONS
STABILISATEURS POUR LA POLYMERISATION DE MONOMERES VINYLIQUES SOLUBLES DANS L'EAU ET PROCEDE DE PRODUCTION DE DISPERSIONS POLYMERES A CONCENTRATION ACCRUE

(30) Priorität: 09.11.2000 DE 10055470
(43) Veröffentlichungstag der Anmeldung: 06.08.2003
(73) Patentinhaber: Fraunhofer-Gesellschaft zur Förderung der angewandten Forschung e.V., 80686 München (DE)
(72) Erfinder: HAHN, Mathias, 14557 Wilhelmshorst (DE); PAULKE, Bernd-Reiner, 14469 Potsdam (DE); JAEGER, Werner, 14532 Kleinmachnow (DE)
(86) Internationale Anmeldenummer: PCT/EP2001/012163
(87) Internationale Veröffentlichungsnummer: WO 2002/038639

(56) Entgegenhaltungen:
- EP-A- 0 630 909
- WO-A-87/03886
- WO-A-96/41821
- DE-A- 19 606 899
- US-A- 5 712 359

## Beschreibung

Die vorliegende Erfindung betrifft Stabilisatoren für die Copolymerisation wasserlöslicher kationischer und nichtionischer Vinylmonomere zu wäßrigen Polymerdispersionen mit erhöhtem Aktivgehalt und ein Verfahren zur Herstellung höherkonzentrierter Polymerdispersionen mit Hilfe dieser Stabilisatoren. Der Stabilisator ist ein kammförmig aufgebautes Pfropfcopolymer aus einem kationischen Vinylpolymer als Rückgratkette und einem Blockcopolymer mit ausbalancierten Hydrophil-hydrophob-Eigenschaften als hängende Seitenketten, welches aus Ethylenoxid und Butylenoxid gebildet wird.

Kationische Vinylpolymere, insbesondere Copolymere kationischer Vinylverbindungen mit Acrylamid, werden technisch in großem Umfang als Prozeßhilfsmittel für die Durchführung von Trennprozessen bei der Wasseraufbereitung und Abwasserreinigung, in der Papier-, Kohle- und Erzindustrie oder in der Erdölgewinnung zur Flockung, Retention oder Entwässerung eingesetzt.

Aufgrund des Zwanges, industrielle Verfahren umweltbewußter zu gestalten und unter dem Gesichtspunkt der abnehmenden Vorräte an Wasser, verbunden mit der Notwendigkeit der Mehrfachnutzung von Wasser, sind wasserlösliche Polymere und insbesondere kationische Ladungen tragende wasserlösliche Polymere mit hohem Molekulargewicht heute Produkte mit ständig steigender wirtschaftlicher Bedeutung. Derartige Produkte werden in einer großen Zahl industrieller Verfahren benutzt, um das Ausmaß der Abtrennung fester und gelöster Stoffe, sowie emulgierter flüssiger Phasen aus flüssigen Strömen durch Koagulation, Ausflockung, Klärung, Sedimentation oder anderen Mechanismen, positiv zu beeinflussen. Trotz der meist geringen Einsatzmengen, insbesondere im Falle von extrem hochmolekularen Polyelektrolyten, besitzen die wasserlöslichen Vinylpolymere oft technologiebestimmende Bedeutung. Die Polymerisation von technisch relevanten kationischen Vinylmonomeren, wie z.B. Diallyldimethyl-Ammoniumchlorid (DADMAC), Acryloyloxyethyltrimethyl-ammoniumchlorid (ADAM), Acryloyloxyethylbenzyldimethyl-ammoniumchlorid (ADAMBQ), oder Trimethyl-methacrylamidopropyl-ammoniumchlorid (TMAPMA) führt zu wasserlöslichen kationischen Polymeren. Demgegenüber ergibt Acrylamid nach einer radikalischen Polymerisation wasserlösliche Polymere, die weitestgehend nichtionischer Natur sind. Die Copolymerisation beider Monomerklässen führt demzufolge zur Bildung von Copolymeren mit unterschiedlicher Ionendichte, abhängig von der Menge an kationischen Einheiten, die in die Polymerkette eingebaut werden.

Die Herstellung dieser Polymere erfolgt nach dem Stand der Technik durch radikalische Polymerisation in homogener oder heterogener Phase. Eine Lösungspolymerisation in Wasser, wie in der US 2,923,701 beschrieben wird, hat dabei den Nachteil, daß bereits bei Polymergehalten < 10 Gew-% hochviskose Systeme vorliegen, was neben technologischen Problemen, wie der Realisierung der homogenen Mischung im Verlauf der Polymerisation und einer effizienten Wärmeabführung, zu einer beschränkten Raum-Zeit-Ausbeute und zu erhöhten Transportkosten führt. Weiterhin bleibt wegen der geringen Monomerkonzentration in der Lösung das zu erzielende Molekulargewicht der Polymerisate sehr begrenzt.

Nach dem Stand der Technik werden diese Nachteile durch Heterophasenpolymerisation in aliphatischen oder aromatischen Kohlenwasserstoffen oder in natürlichen Ölen als inverse Emulsions- oder Suspehsionspolymerisation überwunden. Die EP 0 363 024 stellt exemplarisch eine Ausführungsform einer inversen Emulsionspolymerisation dar, die US 4,645,568 beschreibt die Anwendung eines entsprechenden Suspensionsverfahrens zur Synthese von pulverförmigen Polymerisaten, was durch dem eigentlichen Polymerisationsprozeß nachgeschaltete Trocknung erfolgt. Die entsprechenden Patentschriften bilden zwar noch heute die Basis für die technologische Durchführung eines Großteils der marktgängigen Produkte, speziell unter ökologischen Gesichtspunkten der Polymersynthese und vor allem der Anwendung der Produkte ist das Verhältnis zwischen eigentlichem Wirkstoff und schwer abbaubarer Ölphase von ca. 1:2 zukünftig nur schwer zu akzeptieren. Aufgrund dieser Nachteile wurde die Herstellung von hochmolekularen kationischen Homo- und , Copolymeren mit Acrylamid durch radikalische Polymerisation in wäßrigen Dispersionen vorgeschlagen. Gemäß der DE 42 16 167 ist die Grundvoraussetzung dafür, daß neben einem wasserlöslichen Monomer ein hydrophobes Vinylmonomer und gegebenenfalls ein amphiphatisches Termonomer für die Polymerisation eingesetzt wird. Die Stabilisierung der sich bildenden Polymerpartikel wird durch den Zusatz von wasserlöslichen Polymeren (kationische Polyelektrolyte, vzw. Poly-DADMAC, oder nichtionische wasserlösliche Polymere, wie Polyalkylenether) zur Reaktionsmischung erreicht, wobei für den polymeren Stabilisator ein Molekulargewicht von < 5·10⁵ g/mol festgeschrieben und zusätzlich eine Unverträglichkeit mit dem entstehenden zu dispergierenden Polymer gefordert wird. Als entscheidender Nachteil dieser Offenlegung muß der extrem hohe Anteil von niedermolekularem Stabilisator von bis zu 80 Masse-% bezogen auf den eingesetzten Monomeranteil genannt werden, der dazu führt, daß die Eigenschaften des Finalproduktes entscheidend durch die Eigenschaften des Stabilisators geprägt werden. Man erhält eine bimodale Molekulargewichtsverteilung mit nur geringem Anteil hochmolekularer Komponenten, so daß die Anwendungsmöglichkeiten sehr begrenzt sind und insbesondere den Teil Flockungshilfsmittel für Trennprozesse fest-flüssig oder flüssig-flüssig nicht effizient ausfüllen. In konventionellen Fällungspolymerisationen in wäßriger Salzlösung tendieren die primär entstehenden Polymerpartikel zur sofortigen Assoziation, was insbesondere bei Copolymerisationen von Acrylamid mit geringen Anteilen ionischer Comonomeren schließlich zur Abscheidung technologisch nicht zu beherrschender Polymermassen führt. Deshalb wird vorgeschlagen, die Fällungspolymerisation in Gegenwart von Polyelektrolyten durchzuführen (im Falle der Synthese von kationisch geladenen Polymerdispersionen werden bevorzugt kationische Polyelektrolyte verwendet). Das verwendete Salz ist zumeist durch ein multivalentes Anion charakterisiert. Es bewirkt die Phasenausscheidung des entstehenden Polymers aus der anfänglich homogenen Reaktionsmischung. Dem kationischen Polyelektrolyten werden dispersionsstabilisierende Eigenschaften zugeschrieben. Ein repräsentatives Beispiel für eine derartige Verfahrensweise ist in der US 4,929,655 beschrieben. Hier wird vor allem die Notwendigkeit der Verwendung von Polymerblends als Dispersionsstabilisator als Grundvoraussetzung für eine erfolgreiche Durchführung der Dispersionspolymerisation von kationischen Monomeren in Homo- oder Copolymerisationen mit Acrylamid angeführt, wobei eines der als Stabilisator verwendeten kationischen Polymere im Lösungsmittel unlöslich und die zweite Stabilisatorkomponente ein in der Salzlösung löslicher kationischer Polyelektrolyt ist. Zwar werden bei Anwendung bevorzugter Ausführungsformen dieser Patentschriften mehr oder minder stabile Dispersionen erhalten, als entscheidender Nachteil dieser Varianten zeigt sich aber, daß während des Syntheseprozesses dramatische Viskositätsspitzen durchlaufen werden, was eine Nutzung der Verfahren im großtechnischen Maßstab ausschließt.

Eine Verfahrensverbesserung wird deshalb in der PCT/DE97/00288 dahingehend vorgeschlagen, daß als Dispersionsstabilisator ein kationisches Pfropfcopolymer verwendet wird. Der Stabilisator wird durch radikalische Pfropfung von Polyalkylenglykolen mit kationischen Monomeren erzeugt. Die Synthese erfolgt entweder in einer getrennten Vorstufe, oder er wird in-situ im Verlauf der Dispersionspolymerisation gebildet. Nach den bevorzugten Ausführungsformen ist diese Verfahrensweise jedoch auf Copolymerisationssysteme mit hohem Anteil an kationischen Komponenten und auf Dispersionen mit einem Aktivgehalt < 20 Masse-% beschränkt. Aus diesem Grund wird als Salzmedium vorzugsweise NaCl verwendet, das hier in erster Linie ein Aussalzen des entstehenden Copolymerisates bewirkt.

Die EP 0 630 909 reflektiert dagegen insbesondere auf die unter anwendungstechnischen Gesichtspunkten interessanten Copolymerisationssysteme des Acrylamides mit geringerem Kationengehalt(10 bis 35 Mol-%) und auf die Durchführung der Dispersionspolymerisation bei Aktivgehalten > 20 Masse-%. Als entscheidende Grundsätze für die Durchführbarkeit der Copolymerisationen als Dispersionspolymerisation bei relativ geringen "in-process"-Viskositäten werden dabei genannt:
a) Die Polymerisation verläuft in einer homogenen Salzphase. Das Salz ist durch ein polyvalentes Anion charakterisiert.
b) Die Polymerisation erfolgt in Gegenwart eines in der homogenen Phase löslichen polymeren Dispersionsstabilisators, einem kationischen Polyelektrolyten.
c) Die Polymerisationsparameter werden so gewählt, daß das entstehende Polymerisat in der homogenen Phase unlöslich ist.
d) Nur ein Teil der Monomermischung ist zu Beginn der Polymerisation im Reaktor enthalten. Der Hauptteil der Monomere wird im Verlauf der Reaktion zudosiert. Alternativ wird die Polymerisation in Gegenwart eines geringen Teils an Finaldispersion gestartet.

Als wesentliches Element für die erfolgreiche Durchführung der Dispersionspolymerisation wird weiterhin der Begriff der "Polymerunlöslichkeitsschwellenkonzentration" als ein wesentliches Merkmal festgeschrieben. Dabei handelt es sich um gerade die gebildete (oder vorhandene) Polymerkonzentration, bei der eine Phasenseparation beobachtet wird. Dieser Punkt wird als frühester Zeitpunkt für den Zulauf der Hauptfraktion an Monomeren zum polymerisierenden System definiert. Trotz der in dieser Patentschrift aufgezeigten Fortschritte bei der technologischen Realisierung einer High-solid Dispersionspolymerisation sind auch hier einige Gesichtspunkte nicht erkannt, die zu nachteiligen Merkmalen führen. Trotz der weitgehenden Vermeidung von extremen In-process Viskositätsspitzen im Verlauf der Polymerisation bleibt das Viskositätsniveau auch unter optimaler Versuchsdurchführung auf einem unter energetischen (und somit Kosten-) Gesichtspunkten ungünstig hohem Niveau. Andererseits erfolgt der Monomerzulauf der nichtionischen Acrylamidkomponente und des reaktiveren kationisch modifizierten Acrylester- oder Acrylamidderivatives in konstanter Zusammensetzung. Wegen der erhöhten Reaktivität der kationischen Spezies im Vergleich zum Acrylamid resultiert dies in einer breiten chemischen Uneinheitlichkeit des Finalcopolymers, da anfänglich Makromoleküle mit relativ langen kationischen Sequenzen gebildet werden, und in späten Phasen der Polymerisation zwangsläufig wegen der vorzeitigen Verarmung an kationischer Komponente in der Monomerenmischung zunehmend Makromoleküle mit nur sehr geringem Anteil an kationischen Funktionen entstehen. Eine hohe chemische Einheitlichkeit in den Polymerisaten und insbesondere eine ideale statistische Verteilung der kationischen Ladungsträger in den Polymerketten gerade im Falle von schwach kationisch geladenen Acrylamidpolymerisaten ist neben dem Molekulargewicht ganz entscheidend für deren anwendungstechnischen Eigenschaften.

Der Erfindung liegt daher die Aufgabe zugrunde, Stabilisatoren für die Polymerisation wasserlöslicher hochmolekularer Vinylmonomere und ein Verfahren zur Herstellung von High-solid-Dispersionen wasserlöslicher kationischer hochmolekularer Vinylcopolymere zu entwickeln, womit diese beschriebenen Mängel beseitigt werden.

Diese Aufgabe wird durch den gattungsgemäßen Stabilisator mit den Merkmalen des Anspruchs 1 und das gattungsgemäße Verfahren gemäß den Merkmalen des Anspruchs 5 gelöst. Die jeweiligen Unteransprüche enthalten vorteilhafte Weiterbildungen.

Als Stabilisatoren kommen erfindungsgemäß Polymere in Frage, die in der kontinuierlichen wäßrigen Phase löslich oder zumindest micellar gelöst vorliegen. Hierfür werden verzweigtkettige Copolymere, die.aus einem kationischen Vinylmonomer und einem Blockcopolyether aufgebaut sind, verwendet. Derartige Pfropfcopolymere enthalten die kationischen Einheiten als Rückgratkette, und die amphiphilen Blockcopolyether bilden die hängenden Seitenketten. Die kammförmigen Pfropfcopolymere werden nach den allgemeinen Prinzipien der radikalischen Polymerisation durch Lösungscopolymerisation von kationischen Vinylmonomeren und Blockcopolyethermakromeren unterschiedlicher HLB-Charakteristik in Wasser unter Verwendung beliebiger, jedoch vzw. wasserlöslicher Azoinitiatoren (z.B. V-50), hergestellt.

Als kationische Vinylmonomere werden Diallyldimethyl-ammoniumchlorid (DADMAC), Vinylpyridiniumchlorid, N-Vinylimidazoliniumchlorid und Gemische von diesen Verbindungen oder Verbindungen der allgemeinen 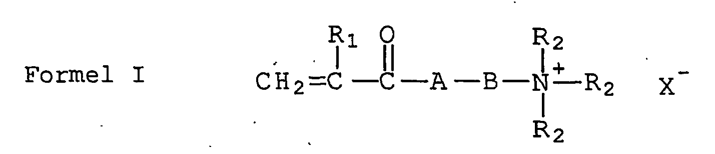 mit
R₁ = Wasserstoff Methyl,
R₂ = Methyl,
A = NH oder O,
B = Alkylen oder Hydroxyalkylen (C₂-C₅) und
X = Halogen oder Methosulfat
eingesetzt.

Die verwendeten Blockalkylenglykolallylethermakromere sind in Abhängigkeit von der Blocklänge der jeweiligen hydrophilen Polyethylenglykolkette und'der hydrophoben Polybutylenglykolkette durch unterschiedliche HLB-Werte charakterisiert, und weisen damit unterschiedliche Löslichkeiten in Wasser auf. Der Einbaugrad der Makromere in die kationischen Pfropfcopolymere wird entscheidend von der HLB-Charakteristik bestimmt. Für effizient wirkende Stabilisatoren wird er generell zwischen 3 und 25 Masse-% eingestellt, wobei die geringeren Anteile für Blockcopolyether mit geringem HLB-Wert (hydrophob, HLB 6,9), die höheren für Blockcopolyether mit höheren HLB-Wert (hydrophil, HLB 14) gelten. Die erfindungsgemäßen Stabilisatoren weisen hinsichtlich der Stabilisierung der bei der Anwendung des erfindungsgemäßen Dispersionspolymerisationsverfahrens entstehenden Polymerpartikel optimale Eigenschaften auf. Vor allem aber sind es im Vergleich zu allen bekannten Stabilisatoren die einzigen Verbindungen, die in der Lage sind, ein effizientes Gleichgewicht zwischen Stabilisierung der Partikel und Resolubilisierung durch kontinuierlich zulaufendes Monomer einzustellen, was die entscheidende Grundvoraussetzung für eine erfolgreiche Durchführung des erfindungsgemäßen Verfahrens ist.

Die Verwendung von DADMAC als kationisches Monomer ist vorteilhaft, da Copolyethermakromer und DADMAC ähnliche Copolymerisationsparameter aufweisen. Damit kann die Polymerzusammensetzung über die Zusammensetzung der Monomerenmischung in einfacher Weise eingestellt werden und es resultiert ein Finalpolymer, das auch bei Polymerisation bis zu technisch relevanten hohen Umsetzungsgraden chemisch sehr einheitlich ist.

Die Molekulargewichte der verzweigtkettigen Copolymere sind generell nicht begrenzt, bevorzugt werden die Polymerisationsbedingungen aber so eingestellt, daß Molekulargewichte zwischen 20 000 und 100 000 g/mol erreicht werden.

Erfindungsgemäß beruht das Polymerisationsverfahren darauf, daß die wasserlöslichen Polymere in Form von Polymerdispersiorien in einer wäßrigen kontinuierlichen Phase und in Gegenwart zumindest eines der erfindungsgemäßen Stabilisatoren dadurch erzeugt werden, daß ein Teil der eingesetzten Monomerenmenge im Verlauf der voranschreitenden Polymerisation zudosiert wird. Spezieller betrifft die Erfindung die Copolymerisation von nichtionischen Acrylamidderivaten mit kationischen Acrylester- und Acrylamidverbindungen mit einem Unterschuß der kationischen Komponente (10 bis 35 mol-%), wobei die wäßrige Reaktionsmischung, ein Salz mit einem mehrvalenten Anion, zumindest einen der spezifischen polymeren Stabilisatoren, der gelöst in der kontinuierlichen wäßrigen Phase oder zumindest in micellar gelöster Form vorliegt und neben der Stabilisierungsfunktion eine effiziente Steuerung eines Fällungs-Resolubilisierungs-Gleichgewichtes übernimmt, und optional einen mehrfunktionellen niederen Alkohol enthält. Die Zugabe der Monomerzulauffraktion zum polymerisierenden System beginnt zu einem wohldefinierten Zeitpunkt, und erfolgt kontinuierlich mit einer wohldefinierten Geschwindigkeit.

Durch das erfindungsgemäße Verfahren und unter Verwendung der erfindungsgemäßen Stabilisatoren verläuft die High-solid-Dispersionspolymerisation bei technologisch vorteilhaften deutlich geringeren und weitgehend konstanten In-process-Viskositäten als bei Anwendung bekannter Verfahren, die Finaldispersionen besitzen eine geringe Viskosität und eine hervorragende Lagerstabilität und die Molekulargewichte der resultierenden Copolymere, charakterisiert durch reduzierte spezifische Viskositätszahlen, gemessen an 0,045 %-igen Lösungen in 0,125 N NaNO₃-Lösung, oder intrinsische Viskositäten, gemessen in diesem Lösungsmittel, sind deutlich höher als im Falle bekannter Dispersionspolymerisationsverfahren.

Das als Bestandteil der kontinuierlichen wäßrigen Phase verwendete Salz kann generell nur aus der Klasse anorganischer Salze mit multivalenten Anionen ausgewählt werden, anorganische Salze mit monovalenten Anionen sind für die erfolgreiche Durchführung des erfindungsgemäßen Dispersionspolymerisationsverfahrens zur Herstellung von kationischen Acrylamidcopolymerisaten mit geringem Kationengehalt nicht einsetzbar. Alternativ kann jedoch auch ein kationischer Polyelektrolyt charakterisiert durch ein Molekulargewicht < 10 000 g/mol, verwendet werden.

Beginn und Geschwindigkeit des Zulaufs der Comonomere ist eines der entscheidendsten Kriterien des erfindungsgemäßen Verfahrens. Der Beginn der Monomerdosierung zum polymerisierenden System muß zu dem Zeitpunkt erfolgen, an dem die phasenseparierten und durch die erfindungsgemäßen Stabilisatoren, die durch eine optimale hydrophil-hydrophob Balance charakterisiert sind, stabilisierten Partikel einen optimalen Quellungsgrad aufweisen. Dies ist systemabhängig. Für, das Copolymerisationssystem Acrylamid/ADAMBQ (90:10) z.B. liegt dieser Punkt im Bereich 60 bis 70 % Umsatz. Weiterhin muß die Zulaufgeschwindigkeit der Comonomere so eingestellt werden, daß dieser optimale Quellungsgrad erhalten bleibt. Dies bedeutet, Zugaberate und Umsatzrate müssen sich im Gleichgewicht befinden, wobei bei der Einstellung der Dosierungsrate der Comonomere zusätzlich deren unterschiedliche Reaktivität zu beachten ist.

Der erfindungsgemäße Prozeß zur High-solid Dispersionscopolymerisation muß diesen oben beschriebenen Verfahrensschritt beinhalten, die Anwendung der erfindungsgemäßen Stabilisatoren ist jedoch generell auch auf die bekannten Lower-solid Dispersionspolymerisationsverfahren anwendbar (z.B. US .5, 006, 590) und führt dabei zu verbesserten In-process Bedingungen.

Als nichtionische wasserlösliche Vinylmonomere können bevorzugt Verbindungen der allgemeinen Formel II 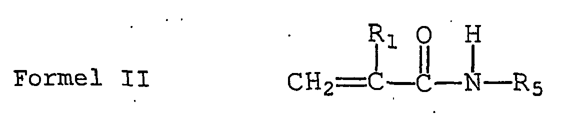 mit
R₁ = Wasserstoff oder Methyl,
R₅ = Wasserstoff, Methyl, Ethyl, Isopropyl, Methylol, Hydroxyethyl oder 2-Hydroxypropyl
eingesetzt werden. Besonders bevorzugt wird Acrylamid eingesetzt.

Als kationische Vinylmonomere sind Verbindungen der allgemeinen Formel III besonders geeignet, wobei 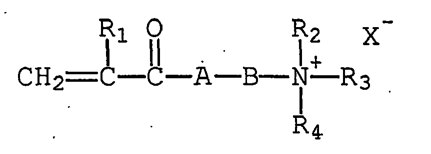 R1 Wasserstoff oder einen Methylrest, R2 und R3 jeweils einen niederen Alkylrest mit 1 bis 4 Kohlenstoffatomen, R4 einen Alkylrest mit 1 bis 4 Kohlenstoffatomen oder Benzylrest, A die Gruppierung NH oder 0, B einen Alkylenrest oder einen Hydroxyalkylenrest mit 2 bis 4 Kohlenstoffatomen und X ein Halogenid oder Methosulfat bedeuten.

Besonders bevorzugt werden als kationische Komponenten Acryloyloxyethyl-trimethylammoniumchlorid (ADAM), Acryloyloxyethyl-benzyldimethylammoniumchlorid (ADAMBQ), die entsprechenden Methacrylderivate MADAM und MADAMBQ, sowie Acrylamidopropyl-trimethylammoniumchlorid (TMAPAA), Acrylamidopropyl-benzyldimethylammoniumchlorid (BDMAPAA) und die entsprechenden Methacrylamidoverbindungen TMAPMA und BDMAPMA verwendet. Das erfindungsgemäße Verfahren ist jedoch keineswegs beschränkt auf die obengenannten Verbindungen, es gilt gleichermaßen für die Verwendung von N-Vinylformamid, N-Vinylacetamid, N-Methyl, N-Vinylacetamid, N-Vinylcaprolactam oder N-Vinylpyrrolidon als wasserlösliche nichtionische Komponente, sowie DADMAC als kationisches Bestandteil des Monomerensystems.

Als Polymerisationsinitiatoren für den erfindungsgemäßen Prozeß können bevorzugt wasserlösliche Peroxyverbindungen, wie z. B. Peroxidisulfate oder wasserlösliche Azoinitiatoren wie V-50 oder V-044 eingesetzt werden. Optional, aber zur Vorbeugung gegen Gelbildung im Verlauf der Polymerisation vorteilhaft, ist der Zusatz von mehrfunktionellen Alkoholen wie Ethylenglykol, Glycerin, Glucose oder Glucosamide als schwache Kettenüberträger.

In einer bevorzugten Ausführungsform des erfindungsgemäßen Verfahrens wird der Prozeß mit einem Aktivgehalt von 16% an nichtionischem wasserlöslichen Monomer und kationischer Cokomponente (Molverhältnis 90:10) in einer kontinuierlichen wäßrigen Phase mit Ammoniumsulfat als Salz mit bivalentem Anion (17%), die zudem zu 1 % einen hinsichtlich der HLB-Eigenschaften für das System angepaßten erfindungsgemäßen DADPEG-Stabilisator sowie optional einen mehrfunktionellen Alkohol enthält, unter Verwendung von V-50 als Initiator bei 50 °C begonnen und die Zugabe konzentrierter Lösungen der Monomere, die zusätzlich weiteren angepaßten (hydrophileren) DADPEG-Stabilisator und Ammoniumsulfat und optional weiteren mehrfunktionellen Alkohol (Gesamtkonzentration 0,5 bis 1%) beinhalten, bei Erreichen des optimalen Umsatzes in Gang gesetzt wird, wobei die Zugaberate der Umsatzgeschwindigkeit der Copolymerisation entspricht. Die mit der Zugabe verbundene Aufkonzentrierung des Systems kann bis zu 30 % Aktivgehalt erfolgen. Nach Beendigung des Zulaufes wird zur Vervollständigung des Polymerisationsumsatzes Initiator nachdosiert.

Wegen der ökonomischen Vorteile, aber auch hinsichtlich einer schützenden Wirkung gegen Hydrolyse der zur Polymerisation eingesetzten Monomerstrukturen, ist der Einsatz von Ammoniumsulfat als unter a) verwendetem Salz bevorzugt.

Das erfindungsgemäße Verfahren und die erfindungsgemäßen Stabilisatoren werden anhand des nachfolgenden Beispiels näher erläutert.

### Beispiel 1:

### Synthese verzweigter Stabilisatoren mit 10 % mit Polyalkylenglycol DADPEG 14/10, DADPEG 9,9/10 und DADPEG 6,9/10

In einem thermostatisierten doppelwandigen Glasreaktor wurden 149 g einer wäßrigen Lösung von DADMAC (aktiver Gehalt 62 %), 10 g einer 1 %-igen EDTA-Lösung und 10 g eines Polyethylenglykol-Block-Butylenglykol-Allylether mit folgender Spezifikation gegeben:

| Typ | Bromzahl | Molmasse [g/mol] | Mittlere Blocklänge [BG/EG] |
|---|---|---|---|
| Polyether HLB 14 | 5,14 | 3110 | 14/49 |
| Polyether HLB 9.9 | 6,75 | 2370 | 14/25 |
| Polyether 6.9 | 8,78 | 1820 | 14/19 |

Das Reaktionsgemisch wurde unter Rühren und Spülen mit Stickstoff auf 80 °C erwärmt (30 min). Anschließend wurde die Polymerisation durch Zugabe von 867 mg 2,2'-Azobis-(2-amidinopropan)-Dihydrochlorid (V-50), aufgelöst in wenig Wasser; gestartet. Im Verlaufe der Polymerisation wurde das Gemisch mit Wasser verdünnt, wobei ein erster Anteil von 50 g nach 15 min und ein zweiter Anteil von 50 g nach 4 Stunden zugesetzt wurde. Nach vier Stunden wurden weitere 100 mg des Initiators V-50 zugesetzt. Nach 6 Stunden wurde das Reaktionsgemisch auf Raumtemperatur abgekühlt. Die Umsetzung der Polymerisationsreaktion wurde gravimetrisch bestimmt, indem die Polymerlösung in Aceton gefällt wurde, wobei Werte höher als 98 % in allen Fällen resultierten. Die viskosimetrischen Messungen in 1N NaCl bei 30 °C ergaben intrinsische Viskositäten im Bereich zwischen 140 und 144 cm³/g. Anhand des [η]-Mₙ-Verhältnisses für Poly-DADMAC ergaben sich hieraus Molekularmassen von mehr als 100 000 g/mol.

### Beispiel 2:

### Synthese des Stabilisators DADPEG 14/25

Der Reaktor wurde mit 121 g DADMAC-Lösung (Aktivität 62 %), 10 g einer 1 %-igen EDTA-Lösung und 25 g eines Polyoxyalkylenether-Polyethers HLB 14 gefüllt. Die Polymerisation wurde wie in Beispiel 1 beschrieben durchgeführt. Die Umsetzung der Polymerisation betrug 97,5 % und es ergab sich eine intrinsische Viskosität in 1 N NaCl von 118 cm³/g.

### Beispiel 3:

### Synthese des Stabilisators DADPEG 6.9/4

Die Polymerisation wurde nach der gleichen Vorschrift wie in Beispiel 1 durchgeführt. Das Ausgangsgemisch für die Reaktion bestand aus 155 g DADMAC-Lösung und 4 g des makromeren Polyethers HLB 6.9 und 10 g einer 1 %-igen EDTA-Lösung. Es ergab sich eine Polymerisationsumsetzung von 98,7 % und die intrinsische Viskosität in 1 N NaCl bei 30 °C betrug 139,8 cm³/g.

### Beispiel 4:

Eine wäßrige Modellpolymerdispersion aus Poly-Acrylamid-co-ADAMBQ (90:10), Stabilisator, Ammoniumsulfat, Wasser (Konzentrationen realitätsnah zu entsprechenden Vorschriften für eine 15%-aktive Rezeptur, z.B. EP 0 637 598) wird hergestellt und in einer Trübungszelle mit der entsprechenden Monomerenmischung titriert. Es wird der Verlauf der Trübung beobachtet. Als Blindwert wird die unstabilisierte Mischung zugrunde gelegt, Tab. 1 gibt die ermittelten relativen Verzögerungsfaktoren für die einzelnen Stabilisatoren wieder .(Blindwert normiert auf 1,0).

**Tab. 1:**

| Stabilisator | Relativer Verzögerungsfaktor |
|---|---|
| Blindwert | 1,0 |
| Stabilisator aus EP 0 630 909, Bsp. 1 | 1,0 |
| Stabilisator aus DE 196 06 899, Bsp.1 | 1,03 |
| DADPEG 6,9/10, vgl. Bsp. 1 diese Schrift 1 | 1,87 |
| DADPEG 14/25, vgl. Bsp. 3 diese Schrift | 1,75 |

Die Ergebnisse der Tab. 1 zeigen eindeutig, daß nur die erfindungsgemäßen Stabilisatoren (abgestuft in Abhängigkeit ihrer Hydrophil-hydrophob-Balance) eine Verzögerung der Partikelauflösung bewirken, bekannte Stabilisatoren zeigen hier keinerlei Effekt, der damit bewiesene Schutz vor Resolubilisierung durch die erfindungsgemäßen Stabilisatoren ist von enormer Bedeutung für die Durchführung des erfindungsgemäßen Zulaufverfahrens. da nur damit einem anderenfalls auftretenden extremen Viskositätsanstieg entgegengewirkt wird.

### Beispiel 5

### Vergleichende Dispersions-Polymerisation im Batch-Verfahren

Aus einer Mischung von Acrylamid und Acryloyloxyethyl-Benzyldimetylammoniumchlorid (ADAMBQ) in einem Verhältnis von 90:10 wird eine kationische Acrylamid-Copolymerdispersion hergestellt. Zu Beginn werden folgende Reagenzien im thermostatisierten doppelwandigen Glasreaktor miteinander versetzt:

| | |
|---|---|
| Entionisiertes Wasser | 75,43 g |
| Hydrophobe Polymerdispersion aus 70 % DADMAC und 30 % ADAMBQ (gemäß EP 0 637 598) | 11,8 g (15 Masse-% Lösung) |
| Ammoniumsulfat | 31,33 g |
| Acrylamid | 43,96 g' (48 Masse-% Lösung) |
| ADAMBQ | 10,01 g (80 Masse-% Lösung) |
| EDTA | 7,76 g (1 Masse-% Lösung) |

Die Mischung wurde auf 50 °C erwärmt und mit Stickstoff 30 Minuten lang gespült. Anschließend wurden 0,24 g einer 1 %-igen wäßrigen Lösung des wasserlöslichen Azo-Initiators V-50 injiziert. Im Laufe der Polymerisation folgten die folgenden Schritte:

| Zeitpunkt | Arbeitsschritte |
|---|---|
| Nach 3 h | 0,76 g V-50 (1 Masse-% Lösung) 1,112 g ADAMBQ (80 Masse-% Lösung) |
| Nach 4 h | 0,8 g V-50 (10 Masse-% Lösung) |
| Nach 5 h | Die Reaktionstemperatur wurde auf 60 °C erhöht. |
| Nach 6 h | Zusatz einer Salzmischung bestehend aus |
| | 11 g Natriumsulfat |
| | 2 g Natriumthiosulfat |
| | 2 g Adipinsäure |

Das Drehmoment zum Zeitpunkt t = 0 betrug 1 Ncm bei 300 rpm. Nach einem anfänglich starken Anstieg des Drehmomentes innerhalb von 20 min bis zu 4,5 Ncm fiel das Drehmoment langsam auf ein Niveau von 2,5 Ncm nach 140 min ab. Mit Zugabe des Monomers und des Initiators stieg das Drehmoment innerhalb von 10 min auf 5,5 Ncm und blieb auf diesem konstanten Niveau bis zum Ende des Verfahrens. Die durch den Zusatz des Salzgemisches beendete Reaktion führte zu einer Abnahme des Drehmomentes auf 2,1 Ncm. Die resultierende Dispersion zeigte eine ausreichende Langzeitstabilität. Die reduzierte spezifische Viskosität (engl. Reduced Specific Viscosity, RSV)einer 0,045 %-igen Lösung des Produkts in 0,125 N Natriumnitrat betrug 13,2 dl/g.

### Beispiel 6:

### Vergleichende Dispersionspolymerisation im Batch-Verfahren mit DADPEG-Stabilisatoren, Aktivgehalt 15 %

Es wurde die gleiche Versuchsvorschrift wie im Beispiel 5 angewendet. Anstelle des Dispersionsmittels wurde der neue Stabilisator DADPEG 6.9/10 (s. Beispiel 1) benutzt. Hierdurch ergaben sich verbesserte Drehmomentwerte während der Reaktion. Das Drehmoment zum Zeitpunkt t = 0 betrug 1 Ncm bei 300 rpm. Nach einem anfänglichen leichten Abfall des Drehmoments innerhalb von 20 min betrug das Drehmoment während des gesamten Prozesses nahezu konstant zwischen 2 und 2,5 Ncm. Der durch Zusatz des Salzgemisches ausgelöste Reaktionsabbruch führte zu einer Senkung des Drehmoments auf 1,2 Ncm. Die resultierende Dispersion zeigte eine hervorragende Langzeitstabilität. Ein RSV von 14, 2 dl/g konnte für dieses Produkt bestimmt werden.

### Beispiel 7

### Vergleichende Dispersionspolymerisation im Batch-Verfahren, Aktivgehalt 22%

Eine Dispersion (Aktivität 22 %) wurde gemäß Beispiel 6 hergestellt, wobei sich das Gemisch aus folgenden Komponenten zusammensetzte:

| | |
|---|---|
| Polymere Dispersionsmittel | 8,85 g DADPEG 9.9/25 (15 Masse-% Lösung) 2,95 g DADPEG 14/25 (15 Masse-% Lösung) |
| Wasser | 56,56 g |
| Acrylamid | 60,245 g (48 Masse-% Lösung) |
| ADAMBQ | 13,33 g (80 Masse-%6Lösung) |
| EDTA | 5, 82 g (1 Masse-% Lösung) |
| Ammoniumsulfat | 35, 08 g |
| Glyzerin | 3g |

Nach Erwärmung auf 50 °C und Spülung mit Stickstoff (30 min) wurde die Polymerisation durch Zusatz von 0,33 g einer 1 %-igen wäßrigen Lösung von V-50 als Initiator gestartet. Das anfängliche Drehmoment von über 1 Ncm stieg kontinuierlich auf einen Wert von 7,2 Ncm nach 180 min. Der sich anschließende Zusatz von 2,153 g ADAMBQ (80 Masse-%-Lösung) und 1,045 g V-50 (1 Masse-%-Lösung) führte zu einem weiteren Anstieg des Drehmomentes auf 8,2 Ncm, so daß in Anbetracht der folgenden Reaktionsschritte (Zusatz von 0,8 g 10 Masse-%-Lösung V-50 nach 240 min und einer Erhöhung der Reaktionstemperatur auf 60 °C nach 300 min) die Rührgeschwindigkeit auf 250 rpm reduziert wurde. Dadurch konnte das Drehmoment zwischen 7,8 und 8,2 Ncm gehalten werden. Der abschließende Zusatz des Salzgemisches führte zu einer Abnahme des Drehmoments auf 2,4 Ncm. Die Dispersion war nicht stabil, allerdings konnte der disperse Zustand wieder hergestellt werden. Durch Auflösung der Dispersion wurden Gelpartikel erhalten.

### Beispiel 8:

### Vergleich des Einflusses des Zusatzes des Monomers

### auf den Verlauf der Polymerisation und der Produkteigenschaften

Eine Dispersion mit höherem Feststoffanteil aus wasserlöslichem, kationischem Polymer wurde aus einem Copolymer aus Acrylamid (90 Mol-%) und ADAMBQ (10 Mol-%) gebildet. Folgende Reagenzien wurden zu Beginn eingesetzt:

| | |
|---|---|
| Stabilisator DADPEG 9.9/25 | 8,85 g (15 Masse-% Lösung) |
| Wasser | 36,56 g |
| Acrylamid | 32,97 g(48 Masse-%-Lösung |
| ADAMBQ | 7,51 g (80 Masse-%-Lösung |
| EDTA | 5,82 g (1 Masse-%-Lösung) |
| Ammoniumsulfat | 23,33 g |
| Glyzerin | 1,1 g |

Das Reaktionsgefäß wurde 30 min mit Stickstoff entgast und die Reaktionslösung auf 50 °C erwärmt (ebenfalls 30 min). Die Polymerisation wurde durch Zusatz von 0,24 g V-50 (1 Masse-% Lösung) gestartet. Anschließend wurde eine Monomerenmischung zugesetzt, die aus folgenden Komponenten bestand:

| | |
|---|---|
| Stabilisator DADPEG 14/25 | 2,95 g (15 Masse-% Lösung) |
| Acrylamid | 27,46 g (48 Masse-% Lösung) |
| ADAMBQ | 5, 63 g (80 Masse-% Lösung) |
| EDTA | 0,1 g |
| Glyzerin | 1,9 g |

Diese Mischung wurde mit 0,3 ml/min zugesetzt (die gesamte Dauer der Dosierung betrug etwa 120 min). Gleichzeitig wurden in einem separaten Strom 11,74 Ammoniumsulfat als Feststoff zugesetzt. Nach 60 min wurden zusätzlich 0,1 g V-50 (1 Masse-% Lösung) zugesetzt. Nach dem vollständigen Zusatz des Monomers wurde die Mischung für weitere 30 min gerührt, bevor folgende Reaktionsschritte folgten:
- Zusatz von 2,155 g ADANIBQ (80 Masse-% Lösung) und 1,05 g V-50 (1 Masse-% Lösung)
- 1 h rühren
- Zusatz von 0,8 g V-50 (10 Masse-% Lösung)
- 1 h rühren
- Erwärmen auf 60 °C und rühren (1 h)
- Zusatz des Salzgemisches aus Natriumsulfat (12,8 g), Natriumthiosulfat (2,33 g) und Adipinsäure (2,33 g)

Der anfängliche Verlauf des Drehmomentes war vergleichbar mit dem Batch-Prozess mit einer Aktivität von 15 %. Zum Zeitpunkt t = 0 betrug das Drehmoment 0,7 Ncm und es folgte ein leichter Abfall auf 1,2 Ncm nach 20 min. Die folgende Tabelle führt die Drehmomentwerte zu verschiedenen Zeitpunkten der Reaktion und ebenso die RSV der Endprodukte auf.

| Fall | Startpunkt/ Umsetzung [min/%] | T1 [Ncm] | T2 [Ncm] | T3 [Ncm] | RSV [dl/g] |
|---|---|---|---|---|---|
| A | 60/ | 2,61 | 4,68 | 1,70 | 13,1 |
| B | 75/ | 2,35 | 4,61 | 1,41 | 14,73 |
| C | 90/62 | 2,18 | 4,24 | 1,40 | 19,05 |
| D | 105/ | 2,05 | 4,50 | 1,56 | 16,23 |
| E | 120/ | 1,44 | 4,58 | 1,45 | 13,78 |

| | | | | | |
|---|---|---|---|---|---|
| Hierbei bedeuten: T1: Drehmoment zu Beginn des Monomerenzusatzes T2: Maximales Drehmoment zum Ende der Polymerisation T3: Drehmoment der Enddispersion | | | | | |

Im Fall C, in dem der Zusatz des Monomers nach 90 min erfolgte, wurde zusätzlich der Verlauf der Polymerisation in der Zulauf-Phase untersucht. Zu Beginn des Zusatzes betrug der Umsatz 62 %, nach der Hälfte der Zeit resultierten 64,1 % und am Ende betrug der Umsatz 65,3 %. Die in diesem Fall gewählte Vorschrift beschreibt die optimalen Bedingungen hinsichtlich des Zeitpunktes als auch der Zusatzrate des Monomers. Im Vergleich zu dem Batch-Verfahren mit einem Aktivgehalt von 22 % (Beispiel 7) resultierten hier geringere in-process-Viskositäten. Zusätzlich wiesen die Endprodukte höhere RSV-Werte auf, die für bessere Anwendungseigenschaften sprechen. Verglichen mit der Dispersionspolymerisation mit einer Aktivität von 15 % konnten lediglich geringe Differenzen hinsichtlich der in-process-Viskosität festgestellt werden.

Alle Dispersionen zeigten eine gute Langzeitstabilität.

### Beispiel 9

### Vergleichende Untersuchungen des Einflusses der Zusatzrate des Monomers

Die gleiche Verfahrensweise wie in Beispiel 9 wurde auch hier benutzt, wobei in der anfänglichen Reaktionsmischung DADPEG 6.9/4 als Dispersionsmittel benutzt wurde. Die Zusatzrate des Monomers wurde variiert und auf Werte von 0,15, 0,3, 0,6 ml/min usw. eingestellt. Die Dosierung des Ammoniumsulfats wurde entsprechend dem Monomerenzusatz durchgeführt. In allen Fällen wurde der Monomerenzusatz nach 90 min gestartet (Umsetzung 62,2/62,7/62,0 % für die entsprechenden Versuche).

Der Verlauf des Drehmomentes (in-process-Viskosität) war vergleichbar zu den vorhergehenden Experimenten, wobei bei einer höheren Zusatzrate des Monomers vergleichbare Ergebnisse zu Fall A in Beispiel 9 (Beginn des Zusatzes bei geringer Umsetzung) und im Falle einer niedrigeren Zusatzrate die Ergebnisse vergleichbar zu Fall E in Beispiel 9 (Beginn des Zusatzes bei höherem Umsatz) resultierten.

Die folgende Tabelle beschreibt die Umsetzung nach Zusatz des Monomers und die RSV-Werte der resultierenden Produkte.

| Fall | Zusätzrate [ml/min] | Umsetzung [%] | RSV [dl/g] |
|---|---|---|---|
| A | 0,15 | . 55 | 14,25 |
| B | 0,30 | 64 | 18,55 |
| C | 0,60 | 82 | 13,02 |

Die hier bestimmten RSV-Werte für die einzelnen Produkte machen die Effizienz einer ausgewogenen Zusatzrate deutlich.

### Beispiel 10

Eine Dispersion mit höherem Feststoffanteil eines wasserlöslichen kationischen Acrylamid-Polymers (25 %) wurde aus einem Terpolymer aus Acrylamid (80 Mol- %), ADAMBQ (10 Mol-%) und ADAMMQ (Aryloyloxyethytrimethyl-Ammoniumchlorid, 10 Mol-%) hergestellt. Die Mischung bestand aus folgenden Komponenten:

| | |
|---|---|
| Stabilisator DADPEG 6.9/4 | 8,85 g (15 Masse-% Lösung) |
| Wasser | 55,91 g |
| Acrylamid | 32,54 g (48 Masse-% Lösung) |
| ADAMBQ | 8,34 g (80 Masse-% Lösung) |
| ADAMMQ | 5,98 g (80 Masse-% Lösung) |
| EDTA | 5,82 g (1 Masse-% Lösung) |
| Ammoniumsulfat | 25,46 g |
| Glycerin | 1,1 g |

Das Reaktionsgefäß wurde mit Stickstoff entgast (30 min) und gleichzeitig die Reaktionsmischung unter Rühren'mit einer Geschwindigkeit von 300 rpm auf 50 °C erwärmt. Die Polymerisation wurde durch Zusatz von 0,24 g V-50 (1 Masse-%-Lösung) gestartet. Nach 90 min wurde eine Mischung aus folgenden Komponenten mit einer Zusatzrate von 0,3 ml/min zugesetzt:

| | |
|---|---|
| Stabilisator DFADPEG 14/10 | 3,25 g (15 Masse-% Lösung) |
| Acrylamid | 26,33 g (48 Masse-% Lösung) |
| ADAMBQ | 6,82 g (80 Masse-% Lösung) |
| ADAMMQ | 4,90 g (80 Masse-% Lösung) |
| EDTA | 0,1 g |
| Glyzerin | 2,2 g |

Die gesamte Zusatzdauer betrug dabei ungefähr 120 min. Gleichzeitig wurden in einem separaten Strom 12,73 g Ammoniumsulfat als Feststoff zugesetzt. Nach der Hälfte dieser Zusatzdauer wurden zusätzlich 0,1 g V-50 (1 Masse-% Lösung) injiziert. Nach vollständigem Zusatz des Monomers wurde das Reaktionsgemisch für weitere 30 min gerührt, bevor die folgenden Reaktionsschritte folgten:
- Zusatz einer Mischung bestehend aus 1,68 g ADAMBQ und 1,21 g ADAMMQ (beide 80 Masse-% Lösungen) und 1,1 g V-50 (1 Masse-% Lösung)
- Rühren (1 h)
- Zusatz von 1 g V-50 (10 Masse-% Lösung)
- Rühren (1 h)
- Erwärmen auf 60 °C und rühren (1 h)
- Zusatz einer Salzmischung aus Natriumsulfat (13,5 g), Natriumthiosulfat (2,5 g) und Adipinsäure (2,5 g)

Der Verlauf für das Drehmoment des Rührers war vergleichbar zu dem Ansatz mit einer Aktivität von 15 % in der Anfangsphase. Zum Zeitpunkt t = 0 betrug das Drehmoment 0,85 Ncm und ein leichter Anstieg auf 1,51 Ncm folgte nach 20 min. Das Drehmoment stieg auf 2,5 Ncm als der Monomerzusatz gestartet wurde und das maximale Drehmoment in der Endphase der Polymerisation betrug 4,94 Ncm. Nach dem Zusatz der Salzmischung resultierte ein Drehmoment von 1,87 Ncm. Dieser Versuch lieferte eine ausreichend stabile Dispersion, die auch wieder in ihren dispersen Zustand überführt werden konnte. Die RSV einer 0,045 %-igen Lösung der verdünnten Enddispersion betrug 20,08 dl/g in 0,125 N Natriumnitrat bei 30 °C. Ein vergleichbares Polymerisationsexperiment im Batch-Verfahren war nicht erfolgreich, weil ein starker Anstieg des Drehmoments zu beobachten war, der bis auf Werte von über 10 Ncm anstieg.

## Patentansprüche

1. Stabilisator für die Polymerisation wasserlöslicher hochmolekularer Vinylmonomere, enthaltend mindestens ein wasserlösliches verzweigtkettiges Copolymer aus
A) mindestens einem kationischen Vinylmonomer
ausgewählt aus der Gruppe Diallyldimethyl-ammoniumchlorid (DADMAC), Vinylpyridiniumchlorid, N-Vinylimidazoliniumchlorid und Gemischen von diesen
oder der allgemeinen Formel I 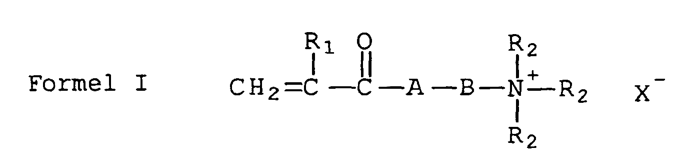 mit
R₁ = Wasserstoff Methyl,
R₂ = Methyl,
A = NH oder O,
B = Alkylen oder Hydroxyalkylen (C₂-C₅)und
X = Halogen oder Methosulfat und
B) mindestens einem amphiphilen monoallylendfunktionalisiertem Blockcopolyether mit hydrophilen Polyethylenglykolketten und hydrophoben Polybutylenglykolketten.

2. Stabilisator nach Anspruch 1, **dadurch gekennzeichnet, dass** für die Synthese des Copolymers als kationisches Vinylmonomer Diallyldimethyl-ammoniumchlorid (DADMAC) ausgewählt wird.

3. Stabilisator nach einem der vorhergehnden Ansprüche, **dadurch gekennzeichnet, dass** die Molekularmasse des Stabilisators zwischen 20.000 und 100.000 g/mol liegt.

4. Stabilisator nach einem der vorhergehnden Ansprüche, **dadurch gekennzeichnet, dass** der Stabilisator in wäßriger Lösung oder in micellarer Form löslich ist.

5. Verfahren zur Herstellung von High-solid Dispersionen wasserlöslicher kationischer hochmolekularen Vinylcopolymeren,
mit folgenden Merkmalen:
a) dass die Polymerisation in einer homogenen Salzphase durchgeführt wird, wobei das Salz durch ein multivalentes Anion charakterisiert ist,
b) dass die Polymerisation in Gegenwart mindestens eines in der Salzphase gelösten oder in micellarer Form gelösten polymeren Stabilisators erfolgt, wobei dieser ein verzweigtkettiges Copolymer aus mindestens einem kationischen Vinylmonomer und mindestens einem amphiphilen Blockcopolyether mit hydrophilen Polyethylenglykolblöcken und hydrophoben Polybutylenglykolblöcken darstellt,
c) dass die Polymerisation in Gegenwart eines radikalischen Inititators erfolgt,
d) dass die anfängliche Polymerisationsmischung ein nichtionisches wasserlösliches Monomer und ein kationisches Vinylmonomer enthält, wobei beide Komponenten in der Summe in einer Konzentration von weniger als 20 Mol-% vorliegen und
e) dass im weiteren Verlauf der Polymerisation von den beiden Komponenten unter d) solche Mengen zudosiert werden, dass die Gesamtkonzentration der beiden Komponenten zwischen 20 und 30 Mol-% liegt, wobei die Dosierungsgeschwindigkeit der Umsatzrate der Copolymerisation angepasst wird dass die Dosierung erfolgt, wenn der Polymerisationsumsatz zwischen 50 und 70% liegt und dass die Zugaberate der Umsatzrate entspricht und der Zeitpunkt des Beginns der Dosierung somit bei einem optimalen Quellungsgrad der entstandenen Polymerpartikel einsetzt.

6. Verfahren nach Anspruch 5,
**dadurch gekennzeichnet, dass** nichtionische wasserlösliche Monomere der allgemeinen Formel II 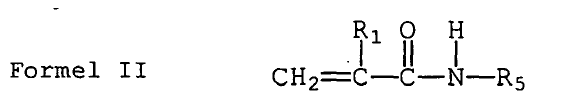 mit
R₁ = Wasserstoff oder Methyl,
R₅ = Wasserstoff, Methyl, Ethyl, Isopropyl, Methylol, Hydroxyethyl oder 2-Hydroxypropyl
eingesetzt werden.

7. Verfahren nach mindestens einem der Ansprüche 5 oder 6,
**dadurch gekennzeichnet, dass** als nichtionisches wasserlösliches Monomer Acrylamid eingesetzt wird.

8. Verfahren nach mindestens einem der Ansprüche 5 bis 7,
**dadurch gekennzeichnet, dass** ein kationisches Vinylmonomer der allgemeinen Formel III 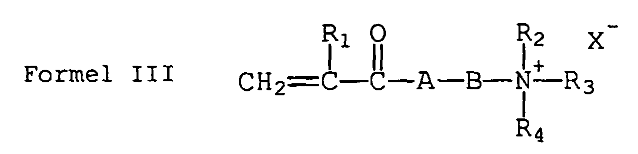 mit
R₁ = Wasserstoff oder Methyl,
R₂ und R₃ = Alkyl (C₁-C₄),
R₄ = Alkyl (C₁-C₁₀) oder Benzyl,
A = NH oder O,
B = Alkylen oder Hydroxyalkylen (C₂-C₄) und
X = Halogen oder Methosulfat
eingesetzt wird.

9. Verfahren nach Anspruch 5,
**dadurch gekennzeichnet, dass** als kationisches Vinylmonomer Diallyldimethyl-ammoniumchlorid (DADMAC) eingesetzt wird.

10. Verfahren nach mindestens einem der Ansprüche 5 bis 9,
**dadurch gekennzeichnet, dass** das Verhältnis zwischen kationischem Vinylmonomer und nichtionischen wasserlöslichen Monomer zwischen 1:9 und 4:6, bezogen auf die Molarität, beträgt.

11. Verfahren nach mindestens einem der Ansprüche 5 bis 10,
**dadurch gekennzeichnet, dass** als radikalischer Polymerisationsinitiator ein wasserlösliches Peroxid oder ein wasserlöslicher Azoinitiator, vorzugsweise 2,2'-Azobis-(amidinopropan)-hydrochlorid eingesetzt wird.

12. Verfahren nach mindestens einem der Ansprüche 5 bis 11,
**dadurch gekennzeichnet, dass** als Stabilisator mindestens ein verzweigtkettiges Copolymer, aus
mindestens einem kationischen Vinylmonomer ausgewählt aus der Gruppe
Diallyldimethyl-ammoniumchlorid (DADMAC), Vinylpyridiniumchlorid, N-Vinylimidazoliniumchlorid und deren Gemischen oder der allgemeinen Formel I 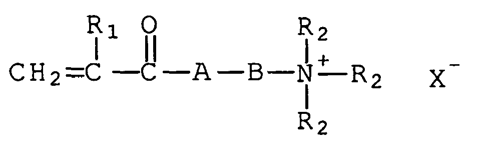 mit
R₁ = Wasserstoff Methyl,
R₂ = Methyl,
A = NH oder O,
B = Alkylen oder Hydroxyalkylen (C₂-C₅) und
X = Halogen oder Methosulfat und
mindestens einem amphiphilen Blockcopolyether mit hydrophilen Polyethylenglykolblöcken und hydrophoben Polybutylenglykolblöcken eingesetzt werden.

13. Verfahren nach einem der Ansprüche 5 bis 12,
**dadurch gekennzeichnet, dass** der Stabilisator eine Molekularmasse zwischen 20.000 und 100.000 g/mol aufweist.

14. Verfahren nach einem der Ansprüche 5 bis 13,
**dadurch gekennzeichnet, dass** als anorganisches Salz Ammoniumsulfat eingesetzt wird.

15. Verfahren nach einem der Ansprüche 5 bis 14,
**dadurch gekennzeichnet, dass** die Konzentration des anorganischen Salzes so gewählt wird, dass sie 5% über der Ausfällgrenze für das jeweilige Copolymersystem liegt.

## Claims

1. Stabiliser for the polymerisation of water-soluble high-molecular vinyl monomers,
containing at least one water-soluble branched-chain copolymer from
A) at least one cationic vinyl monomer
selected from the group
diallyldimethyl ammonium chloride (DADMAC), vinyl pyridinium chloride, N-vinyl imidazolinium chloride and mixtures of these
or of the general Formula I 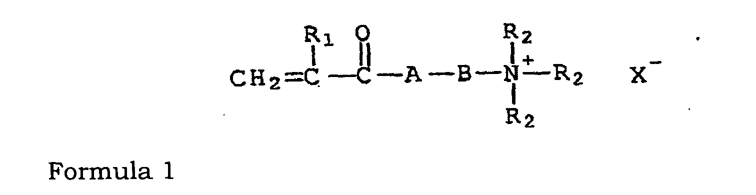 with
R₁ = hydrogen, methyl,
R₂ = methyl
A = NH or O,
B = alkylene or hydroxyalkylene (C₂-C₅) and
X = halogen or methosulphate
B) at least one amphiphilic monoallyl end-functionalised block copolyether with hydrophilic polyethylene glycol chains and hydrophobic polybutylene glycol chains.

2. Stabiliser according to claim 1, **characterised in that** diallyldimethyl ammonium chloride (DADMAC) is selected as cationic vinyl monomer for the synthesis of the copolymer.

3. Stabiliser according to one of the preceding claims, **characterised in that** the molecular mass of the stabiliser is between 20,000 and 100,000 g/mol.

4. Stabiliser according to one of the preceding claims, **characterised in that** the stabiliser is soluble in aqueous solution or in micellar form.

5. Method for the production of high-solid dispersions of water-soluble cationic high-molecular vinyl copolymers, having the following features:
a) that the polymerisation is implemented in a homogeneous salt phase, the salt being **characterised by** a multivalent anion,
b) that the polymerisation is effected in the presence of at least one polymer stabiliser which is dissolved in the salt phase or dissolved in micellar form, said stabiliser representing a branched-chain copolymer from at least one cationic vinyl monomer and at least one amphiphilic block copolyether with hydrophilic polyethylene glycol blocks and hydrophobic polybutylene glycol blocks,
c) that the polymerisation is effected in the presence of a radical initiator,
d) that the initial polymerisation mixture contains a non-ionic water-soluble monomer and a cationic vinyl monomer, both components being present in the sum in a concentration of less than 20% by mol and
e) that, in the further course of the polymerisation of the two components under d), those quantities are metered in such that the total concentration of the two components is between 20 and 30% by mol, the metering speed being adapted to the conversion rate of the copolymerisation with the proviso that the metering is effected if the polymerisation conversion is between 50 and 70% and that the addition rate corresponds to the conversion rate and the time of the beginning of the metering hence begins at an optimal swelling degree of the resulting polymer particles.

6. Method according to claim 5,
**characterised in that** non-ionic water-soluble monomers of the general Formula II 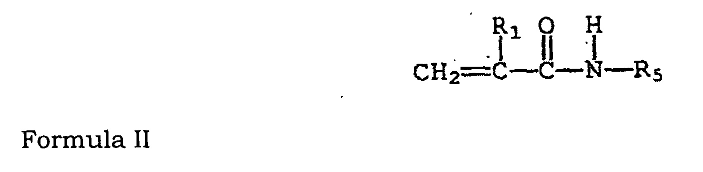 with
R₁ = hydrogen or methyl,
R₅ = hydrogen, methyl, ethyl, isopropyl, methylol, hydroxyethyl or 2-hydroxypropyl
are used.

7. Method according to at least one of the claims 5 or 6,
**characterised in that** acrylamide is used as non-ionic water-soluble monomer.

8. Method according to at least one of the claims 5 to 7,
**characterised in that** a cationic vinyl monomer of the general Formula III 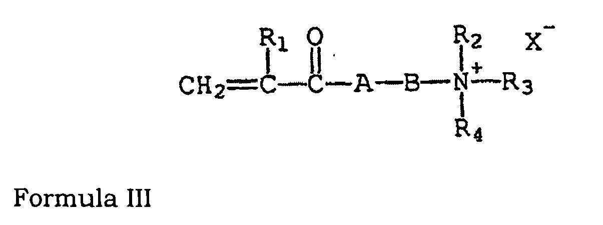 with
R₁ = hydrogen or methyl,
R₂ and R₃ = alkyl (C₁-C₄),
R₄ = alkyl (C₁-C₁₀) or benzyl,
A = NH or O,
B = alkylene or hydroxyalkylene (C₂-C₄) and
X = halogen or methosulphate
is used.

9. Method according to claim 5,
**characterised in that** diallyldimethyl ammonium chloride (DADMAC) is used as cationic vinyl monomer.

10. Method according to at least one of the claims 5 to 9,
**characterised in that** the ratio between cationic vinyl monomer and non-ionic water-soluble monomer is between 1 : 9 and 4 : 6, relative to the molarity.

11. Method according to at least one of the claims 5 to 10,
**characterised in that** there is used as radical polymerisation initiator a water-soluble peroxide or a water-soluble azo initiator, preferably 2, 2'-azobis-(amidinopropane)-hydrochloride.

12. Method according to at least one of the claims 5 to 11,
**characterised in that** at least one branched-chain copolymer, as stabiliser, from
at least one cationic vinyl monomer selected from the group
diallyldimethyl ammonium chloride (DADMAC), vinyl pyridinium chloride, N-vinyl imidazolinium chloride and mixtures thereof or of the general Formula I 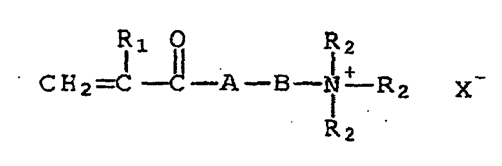 with
R₁ = hydrogen, methyl,
R₂ = methyl
A = NH or O,
B = alkylene or hydroxyalkylene (C₂-C₅) and
X = halogen or methosulphate
at least one amphiphilic block copolyether with hydrophilic polyethylene glycol blocks and hydrophobic polybutylene glycol blocks are used.

13. Method according to one of the claims 5 to 12,
**characterised in that** the stabiliser has a molecular mass between 20,000 and 100,000 g/mol.

14. Method according to one of the claims 5 to 13,
**characterised in that** ammonium sulphate is used as inorganic salt.

15. Method according to one of the claims 5 to 14,
**characterised in that** the concentration of the inorganic salt is chosen such that it is 5% above the precipitation limit for the respective copolymer system.

## Revendications

1. Stabilisateur destiné à la polymérisation de monomères vinyliques de poids moléculaire élevé solubles dans l'eau, contenant au moins un copolymère à chaîne ramifiée soluble dans l'eau et composé de :
A) au moins un monomère vinylique cationique
choisi dans le groupe constitué par le chlorure de diallyldiméthylammonium (DADMAC), le chlorure de vinylpyridinium, le chlorure de N-vinylimidazolinium et les mélanges de ceux-ci,
ou répondant à la formule générale I 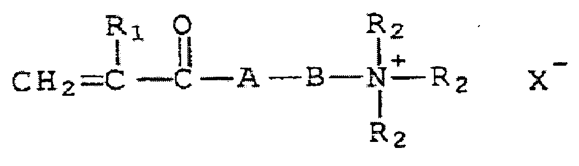 Formule I dans laquelle
R₁ = hydrogène ou méthyle,
R₂ = méthyle,
A = NH ou O,
B = alkylène ou hydroxyalkylène (en C₂-C₅), et
X = halogène ou méthosulfate, et
B) au moins un copolyéther à blocs amphiphile à fonction terminale monoallyle comportant des chaînes polyéthylène glycol hydrophiles et des chaînes polybutylène glycol hydrophobes.

2. Stabilisateur selon la revendication 1,
**caractérisé en ce que**
comme monomère vinylique cationique destiné à la synthèse du copolymère on choisit du chlorure de diallyldiméthylammonium (DADMAC).

3. Stabilisateur selon l'une des revendications précédentes,
**caractérisé en ce que**
la masse moléculaire du stabilisateur est comprise entre 20 000 et 100 000 g/mol.

4. Stabilisateur selon l'une des revendications précédentes,
**caractérisé en ce que**
le stabilisateur est soluble en solution aqueuse ou sous forme micellaire.

5. Procédé de production de dispersions à teneur en solides élevée, solubles dans l'eau, composées de copolymères de vinyle cationiques de poids moléculaire élevé, avec les caractéristiques suivantes :
a) la polymérisation est conduite dans une phase saline homogène, le sel étant **caractérisé par** un anion polyvalent,
b) la polymérisation a lieu en présence d'au moins un stabilisateur polymère dissous dans la phase saline ou dissous sous forme micellaire, celui-ci représentant un copolymère à chaîne ramifiée composé d'au moins un monomère vinylique cationique et d'au moins un copolyéther à blocs amphiphile comportant des blocs polyéthylène glycol hydrophiles et des blocs polybutylène glycol hydrophobes,
c) la polymérisation a lieu en présence d'un amorceur radicalaire,
d) le mélange de polymérisation de départ contient un monomère non ionique soluble dans l'eau et un monomère vinylique cationique, ces deux composants étant présents dans une concentration totale inférieure à 20 % en mole, et
e) on ajoute, dans le cours ultérieur de la polymérisation, des quantités des deux composants cités en d) telles que la concentration totale de ces deux composants soit comprise entre 20 et 30 % en mole, la vitesse d'ajout étant adaptée à la vitesse de conversion de la copolymérisation, à condition que l'ajout ait lieu lorsque la conversion de polymérisation se situe entre 50 et 70 % et que la vitesse d'addition corresponde à la vitesse de conversion, l'ajout débutant donc à l'instant auquel le degré de gonflement des particules polymères formées est optimal.

6. Procédé selon la revendication 5,
**caractérisé en ce qu'**
on utilise des monomères non ioniques solubles dans l'eau répondant à la formule générale II 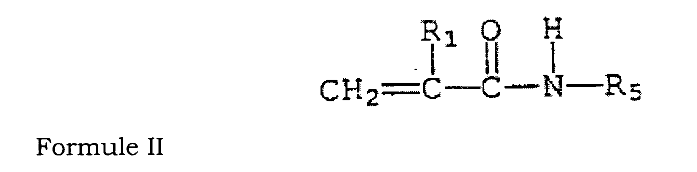 dans laquelle
R₁ = hydrogène ou méthyle,
R₅ = hydrogène, méthyle, éthyle, isopropyle, méthylol, hydroxyéthyle ou 2-hydroxypropyle.

7. Procédé selon l'une au moins des revendications 5 ou 6,
**caractérisé en ce qu'**
on utilise un acrylamide comme monomère non ionique soluble dans l'eau.

8. Procédé selon l'une au moins des revendications 5 à 7,
**caractérisé en ce qu'**
on utilise un monomère vinylique cationique répondant à la formule générale III 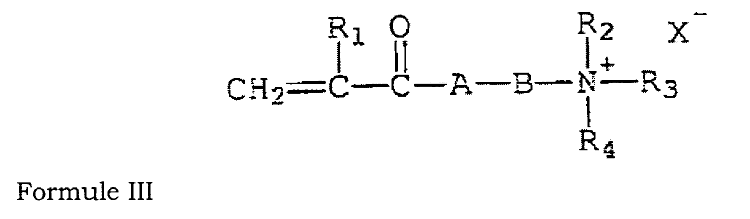 dans laquelle
R₁ = hydrogène ou méthyle,
R₂ et R₃ = alkyle (en C₁-C₄),
R₄ = alkyle (en C₁-C₁₀) ou benzyle,
A=NH ou O,
B = alkylène ou hydroxyalkylène (en C₂-C₄) et
X = halogène ou méthosulfate.

9. Procédé selon la revendication 5,
**caractérisé en ce qu'**
on utilise du chlorure de diallyldiméthylammonium (DADMAC) comme monomère vinylique cationique.

10. Procédé selon l'une au moins des revendications 5 à 9,
**caractérisé en ce que**
le rapport entre le monomère vinylique cationique et le monomère non ionique soluble dans l'eau est compris entre 1 : 9 et 4 : 6, en fonction de la molarité.

11. Procédé selon l'une au moins des revendications 5 à 10,
**caractérisé en ce qu'**
on utilise comme amorceur radicalaire de polymérisation un peroxyde soluble dans l'eau ou un amorceur azoïque soluble dans l'eau, de préférence l'hydrochlorure de 2,2'-azobis-amidinopropane.

12. Procédé selon l'une au moins des revendications 5 à 11,
**caractérisé en ce qu'**
on utilise comme stabilisateur au moins un copolymère à chaîne ramifiée composé de :
au moins un monomère vinylique cationique choisi dans le groupe constitué par le chlorure de diallyldiméthylammonium (DADMAC), le chlorure de vinylpyridinium, le chlorure de N-vinylimidazolinium et leurs mélanges ou la formule générale I 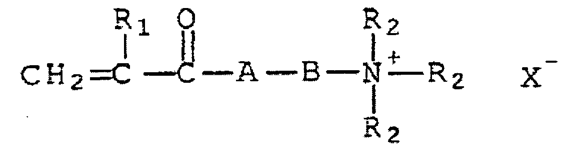
dans laquelle
R₁ = hydrogène ou méthyle,
R₂ = méthyle,
A = NH ou O,
B = alkylène ou hydroxyalkylène (en C₂-C₅) et
X = halogène ou méthosulfate, et
au moins un copolyéther à blocs amphiphile comportant des blocs polyéthylène glycol hydrophiles et des blocs polybutylène glycol hydrophobes.

13. Procédé selon l'une des revendications 5 à 12,
**caractérisé en ce que**
le stabilisateur présente une masse moléculaire comprise entre 20 000 et 100 000 g/mol.

14. Procédé selon l'une des revendications 5 à 13,
**caractérisé en ce qu'**
on utilise du sulfate d'ammonium comme sel inorganique.

15. Procédé selon l'une des revendications 5 à 14,
**caractérisé en ce que**
la concentration du sel inorganique est telle qu'elle se situe à 5 % au-dessus de la limite de précipitation de chaque système copolymère.
